# EUROPÄISCHE PATENTSCHRIFT

(11) **EP 1 426 622 B1**
(45) Veröffentlichungstag und Bekanntmachung des Hinweises auf die Patenterteilung: **01.10.2008**
(21) Anmeldenummer: 03024674.8
(22) Anmeldetag: 28.10.2003
(51) Int. Cl.: F15B 13/043, F15B 13/04

(54) **Steuerventil**
Control valve
Distributeur de commande

(30) Priorität: 28.11.2002 DE 10255454
(43) Veröffentlichungstag der Anmeldung: 09.06.2004
(73) Patentinhaber: Tries GmbH + Co. KG, 89584 Ehingen (DE)
(72) Erfinder: Herzog, Robert, 89614 Öpfingen (DE); Zimmer, Thomas, 89616 Rottenacker (DE)
(74) Vertreter: Eisele, Otten, Roth & Dobler

(56) Entgegenhaltungen:
- DE-A1- 3 641 023
- DE-A1- 19 632 368
- US-A- 5 665 919
- US-A- 5 730 174

## Beschreibung

Die Erfindung betrifft ein Steuerventil nach dem Oberbegriff des Anspruchs 1.

Steuerventile werden in hydraulischen oder pneumatischen Anlagen zur Ansteuerung von Antriebsaggregaten und/oder Stellelementen verwendet.

Um Ventile mit hohen Arbeitsdrücken und großer Dynamik zu steuern, werden handelsüblich sogenannte Servoventile eingesetzt, bei denen ein elektrisch ansteuerbares Vorsteuerventil verwendet wird, um ein Hauptsteuerventil zu betätigen. Der Arbeitsdruck des Vorsteuerventils ist hierbei in der Regel niedriger als der hohe Arbeitsdruck des Hauptsteuerventils, so dass hier Elemente zur Druckreduzierung für das Vorsteuerventil erforderlich sind.

Weiterhin ist bereits eine Anordnung bekannt geworden, bei der ein Vorsteuerventil im Innern des Hauptsteuerventils angeordnet ist. Dies wird dadurch realisiert, dass der Kolben des Vorsteuerventils zusammen mit den entsprechenden Fluidkammern zur Betätigung des Vorsteuerventils im Innern eines Ventilkolbens des Hauptsteuerventils angeordnet werden. Die bekannte im Handel angebotene Vorrichtung ist hierbei mit einem Elektromotor bzw, einem sogenannten Torque-Motor versehen, der über ein Zwischengetriebe und eine Spindel eine Steuerstange verschiebt, die mit dem Vorsteuerkolben verbunden ist.

Diese Ausführung hat den Vorteil, dass beide Ventile, das Vorsteuerventil und das Hauptsteuerventil mit dem gleichen Arbeitsdruck arbeiten, es ist jedoch aufgrund des aufwendigen mechanischen Aufbaus zwischen Elektromotor und Vorsteuerkolben vergleichsweise kostenaufwendig und darüber hinaus verschleiß- und störanfällig.

Darüber hinaus ist der Druckschrift US 5,730,174 ein Linearmotor, bestehend aus einer Steuerspule und einem Steuerkolben, zu entnehmen, wobei der Steuerkolben das Steuerventil steuert.

Der Druckschrift US 5,665,919 kann eine Vibrationstestvorrichtung mit Schwingspule entnommen werden, die direkt mit einem Ventilkolben in Wirkverbindung steht.

Die Druckschrift DE 196 32 368 betrifft ein elektrohydraulisches Regelwegeventil, wobei ein Proportionalmagnet einen Vorsteuerschieber betätigt, wodurch ein Hauptsteuerschieber gesteuert wird.

Aufgabe der Erfindung ist es, gegenüber diesem Stand der Technik ein. Steuerventil vorzuschlagen, das ohne Druckreduzierung für das Vorsteuerventil arbeiten kann, mit wenig Aufwand herzustellen und darüber hinaus wenig verschleiß- und störanfällig ist.

Diese Aufgabe wird, ausgehend von einer vorrichtung gemäß dem Oberbegriff des Anspruchs 1, durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Steuerventil dadurch aus, dass ein Linearmotor eine als Magnetanker ausgebildete Steuerstange mit daran befestigtem Permanentmagneten umfasst, wobei der Magnetanker im Inneren einer Steuerspule axial verschiebbar ist. Die Steuerstange sollte hierbei nach Möglichkeit aus einem nichtmagnetischen Material bestehen, so dass aufgrund des definierten Magnetfeldes des Permanentmagneten die Position des Ankers durch entsprechende Ansteuerung der Steuerspule zuverlässig eingestellt werden kann.

Eine solche Steuerstange kann im Falle einer axial fluchtenden Anordnung mit dem Vorsteuerkolben unmittelbar mit diesem verbunden sein.

Der Linearmotor kann beispielsweise dadurch realisiert werden, dass ein Anker mit einem Permanentmagneten im Innern einer Spule axial verschiebbar angeordnet wird. Durch geeignete Ansteuerung der feststehenden Spule wird dieser bewegliche Anker durch das entsprechende Magnetfeld in eine definierte Position gebracht. Eine solche Vorrichtung, die nach dem sogenannten "voice coil"-Prinzip arbeitet, kann berührungslos und somit äußerst verschleißarm arbeiten. Darüber hinaus ist nur eine minimale Anzahl von Teilen zur Realisierung einer solchen linearen Antriebseinheit erforderlich, wodurch sich der Fertigungsaufwand begrenzen lässt und die Störanfälligkeit reduziert wird.

Bevorzugt wird ein solcher Linearmotor in der axialen Verlängerung des Vorsteüerkolbens angeordnet. Hierdurch ergibt sich eine kompakte, platzsparende Einheit, die es ermöglicht sowohl den Linearmotor als auch den Vorsteuerkolben entlang der gleichen geometrische Achse verschiebbar anzuordnen.

In einer Weiterbildung dieser Ausführungsform wird der Linearmotor hierbei direkt mit dem Vorsteuerkolben mechanisch gekoppelt. Insbesondere dann, wenn Anker und Vorsteuerkolben entlang einer gemeinsamen geometrischen Achse verschiebbar sind, ist eine solche direkt mechanische Kopplung besonders einfach realisierbar.

Weiterhin wird in einer vorteilhaften Ausführungsform eine Notbetätigung mit Hilfe eines Notbetätigungselementes vorgesehen. Eine solche Notbetätigung ist sinnvoll, um im Falle eines, Ausfalls der elektrischen Ansteuerung, beispielsweise in Folge eines Stromausfalls oder feiner Defekts die mittels dem Steuerventil gesteuerte Anlage wenigstens eingeschränkt funktionsfähig zu halten.

Ein solches Notbetätigungselement kann beispielsweise direkt am Vorsteuerkolben angreifen und dazu dienen, den Vorsteuerkolben manuell zu verschieben.

In einer bevorzugten Ausführungsform der Erfindung wird ein Notbetätigungselement an der dem Vorsteuerkolben gegenüberliegenden Seite des Linearmotors angeordnet. Diese Anordnung bietet den Vorteil der guten Zugänglichkeit von außen und lässt darüber hinaus die dem Linearmotor gegenüberliegende Stirnseite des Vorsteuerkolbens für die Anordnung weiterer Ventilkomponenten frei.

In einer besonderen Ausführungsform der Erfindung wird der Anker so ausgebildet und angeordnet, dass er unmittelbar mit dem Notbetätigungselement verschiebbar ist. Dies kann beispielsweise in der oben angeführten Ausführungsform durch eine entsprechend lange Ausführung der Steuerstange verwirklicht sein, an der der Permanentmagnet so angeordnet ist, dass sich dieser im Innern der Steuerspule befindet, die Steuerstange jedoch von der Stirnseite der Steuerspule her zugänglich ist.

Die letztgenannte Ausführungsform bietet den Vorteil, dass das von außen zu betätigende Notbetätigungselement im Normalbetrieb von dem Magnetanker bzw. der Steuerstange beabstandet angeordnet werden kann. Die Abdichtung des von außen zugänglichen Notbetätigungselementes gegenüber der Gehäusewandung des Steuerventils ist dadurch im Normalbetrieb statisch. Eine statische Abdichtung ist stets weniger aufwendig und leichter dauerhaft dichtzuhalten im Vergleich zu einer dynamischen Dichtung, die erforderlich wäre, falls das die Wandung durchsetzende Notbetätigungselement jede Bewegung des Steuerkolbens im Normalbetrieb mit ausführen würde.
In einer besonderen Ausführung wird auf der dem Linearmotor gegenüberliegenden Seite des Vorsteuerkolbens ebenfalls ein Nothandbetätigungselement vorgesehen. Dies ist insbesondere dann von Vorteil, wenn das erstgenannte Nothandbetätigungselement vom Vorsteuerkolben beabstandet und somit von diesem im Normalbetrieb mechanisch entkoppelt vorgesehen wird. In diesem Fall genügt es für die Funktion der Nothandbetätigung, wenn diese jeweils von einer Seite her durch Drücken mittels dem jeweiligen Nothandbetätigungselement auf die Steuerstange bzw. den Vorsteuerkolben erfolgt. Dies kann mechanisch mit Hilfe eines in das Ventilgehäuse einführbaren Hilfswerkzeugs vorgenommen werden.

In einer Weiterbildung der Erfindung wird zudem ein Positions- oder Wegsensor für den Vorsteuerkolben vorgesehen. In Verbindung mit dem oben genannten Ausführungsbeispiel kann ein solcher Sensor beispielsweise an der dem Linearmotor gegenüberliegenden Stirnseite des Vorsteuerkolbens angeordnet werden. Auf diese Weise ist eine exakte Einstellung der Vorsteuerkolbenposition möglich, indem diese erfasst und zur Rückkopplung verwendet wird. Mit Hilfe eines Regelkreises kann der Vorsteuerkolben sodann in die gewünschte Position eingeregelt werden. Darüber hinaus kann mit Hilfe einer solchen Sensorik ein defektes Steuerventil erfasst und angezeigt werden, der sich durch eine nicht korrekte Position des Vorsteuerkolbens ergibt.

Eine erfindungsgemäße Anordnung ist problemlos so zu realisieren, dass das Vorsteuerventil bzw. der Vorsteuerkolben den vollen Arbeitsdruck der Hydraulikanlage oder -maschine schaltet und somit zur Steuerung des Hauptsteuerventils nutzt. Wie bereits eingangs erwähnt, entfällt hierdurch die Notwendigkeit einer Druckreduzierung und dementsprechend auch der hierzu erforderliche Aufwand.

Weiterhin wird durch Verwendung eines hohen Vorsteuerdrucks eine schnelle Ansteuerung des Hauptsteuerkolbens realisiert, so dass das gesamte Steuerventil mit insgesamt sehr kurzer Reaktionszeit zu verwirklichen ist.

Die Null- oder Neutralposition des Hauptsteuerkolbens wird bevorzugt über Federelemente festgelegt. Dadurch, dass über den Vorsteuerkolben der volle Arbeitsdruck gesteuert und somit der Hauptsteuerkolben mit einem sehr hohen Druck beaufschlagt wird, können die Federelemente zur Festlegung der Nullposition ebenfalls stärker dimensioniert werden. Hierdurch wird die Nullposition ohne Druckbeaufschlagung des Hauptsteuerkolbens schnell und zuverlässig eingenommen. Darüber hinaus können bei der Verwendung stärkerer Federn für die Nullpunktseinstellung größere Federtoleranzen zugelassen werden, was den Aufwand nochmals verringert.

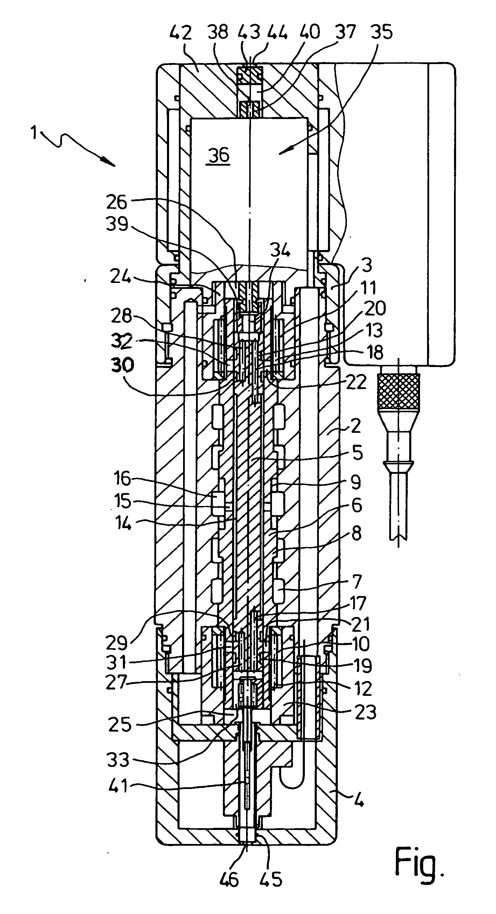

Ein Ausführungsbeispiel der Erfindung ist in der Zeichnung dargestellt und wird anhand der Figur nachfolgend näher erläutert.

Die einzige Figur zeigt ein erfindungsgemäßes Steuerventil im Längsschnitt.

Das Steuerventil 1 umfasst ein Ventilgehäuse 2, das beidseitig mit einer ersten und einer zweiten Abschirmung 3, 4 versehen ist.

Im Innern des Ventilgehäuses 1 sind im Einzelnen nicht näher dargestellte Fluidleitungen vorgesehen, um das Fluid, beispielsweise Hydrauliköl funktionsgemäß zu den entsprechenden Bereichen an dem Vorsteuerkolben sowie dem Hauptsteuerkolben zu- bzw. abzuführen. Die Außenanschlüsse sind ebenfalls nicht näher dargestellt.

Ein Vorsteuerkolben 5 ist axial zentriert im Innern eines Hauptsteuerkolbens 6 axial verschiebbar angeordnet.

Entlang dem Hauptsteuerkolben 6 sind gehäuseseitig ringförmige Fluidkammern 7 angeordnet, die über Ringvorsprünge 8 bzw. dazwischen liegende Querschnittsverjüngungen 9 des Hauptsteuerkolbens 6 je nach der axialen Position des Hauptsteuerkolbens 6 miteinander verbunden oder voneinander getrennt werden. Die Zuleitung bzw. Ableitung zu den Fluidkammern 7 wird über nicht näher dargestellte Bohrungen im Ventilgehäuse 2 bewerkstelligt.

Der Hauptsteuerkolben 6 ist stirnseitig über zwei Steuerkammern 10, 11 durch Druckbeaufschlagung mit Hilfe des entsprechenden Fluids, z.B. Hydrauliköl in axialer Richtung gesteuert verschiebbar.

Die Mittenzentrierung des Hauptsteuerkolbens wird über zwei Federelemente, beispielsweise Spiralfedern 12, 13 in den Steuerkammern 10, 11 bewerkstelligt. Die Druckbeaufschlagung der Steuerkammern 10, 11 wird über die Position des Vorsteuerkolbens 5 vorgenommen.

Der Vorsteuerkolben 5 weist hierzu mittig einen Bereich mit gegenüber dem Innendurchmesser des Hauptsteuerkolbens 6 verkleinertem Durchmesser auf, so dass sich zwischen dem Vorsteuerkolben 5 und dem Hauptsteuerkolben 6 entlang dem Außenumfang des Vorsteuerkolbens 5 eine Fluidverbindung 14 zu den beidseitigen Endbereichen des Vorsteuerkolbens 5 mit unter Druck stehendem Fluid, beispielsweise Hydrauliköl ergibt. Der Zufluss ergibt sich hierbei über Bohrungen 15 im Hauptsteuerkolben 6, die mit der druckseitigen Fluidzufuhr 16 des Steuerventils in Verbindung steht.

In den Endbereichen ist die Fluidverbindung 14 mit zwei innerhalb des Vorsteuerkolbens 5 angeordneten Kanälen 17, 18 verbunden, die ihrerseits jeweils eine Anschlussöffnung 19, 20 am Außenumfang des Vorsteuerkolbens 5 umfassen. In diesem Bereich entspricht der Außenumfang des Vorsteuerkolbens 5 dem Innenumfang des Hauptsteuerkolbens 6. Je nach Position des Vorsteuerkolbens 5 liegen die Anschlussöffnungen 19, 20 einer Verbindungsöffnung 21, 22 im Hauptsteuerkolben 6 gegenüber oder aber die Anschlussöffnungen 19, 20 sind wie im dargestellten Beispiel durch die Innenwandung des Hauptsteuerkolbens 6 verschlossen.

Über die Verbindungsöffnungen 21, 22 kann in der entsprechenden Position des Vorsteuerkolbens 5 eine Verbindung zwischen der Fluidzufuhr 16 über die Bohrung 15 und die Fluidverbindung 14 bis hin zu den Steuerkammern 10, 11 hergestellt werden.

Der Hauptsteuerkolben 6 liegt in seinen Endbereichen formschlüssig an Abschlusshülsen 23, 24 an. Die in axialer Verlängerung zum Hauptsteuerkolben 6 befindlichen Hohlräume innerhalb der Abschlusshülsen 23, 24 dienen zum Auffangen etwaigen Lecköls. Sie bilden gewissermaßen Leckölkammern 25, 26, die auf nicht näher dargestellte weise mit einem Fluidvorrat, z.B. einem Hydrauliköltank verbunden sind. Folgerichtig sind die Leckölkammern 25, 26 stets drucklos.

Der Vorsteuerkolben 5 weist stirnseitig Kanäle 27, 28 auf, die am Außenumfang des Vorsteuerkolbens 5 mit Anschlussöffnungen 29, 30 verbunden sind. Die Kanäle 27, 28 sind stirnseitig über einen Seitenkanal 33 bzw. eine Axialbohrung 34 mit den Leckölkammern 25, 26 verbunden. Je nach Position des Vorsteuerkolbens 5 befinden sich die Anschlussöffnungen 29, 30 vor Verbindungsöffnungen 31, 32, die ihrerseits mit den Steuerkammern 10, 11 verbunden sind, oder aber die Anschlussöffnungen 29, 30 sind wie im dargestellten Fall durch die Innenwandung des Hauptsteuerkolbens 6 verschlossen.

Auf einer Seite ist der Vorsteuerkolben 5 mit einem Linearmotor 35 mechanisch gekoppelt. Der Linearmotor 35 umfasst eine Steuerspule 36, innerhalb der ein nicht näher dargestellter Magnetanker axial verschiebbar angeordnet ist. Der Magnetanker umfasst einen von der Steuerspule 36 in der gezeichneten Darstellung verdeckten Permanentmagneten, der an einer Steuerstange 37 befestigt ist. Die Steuerstange 37 ist mit einer zentralen Durchgangsbohrung 38 versehen und über eine stirnseitig in den Vorsteuerkolben 5 eingelegte Kupplungshülse 39 zug- und druckfest mit dem Vorsteuerkolben 5 verbunden. Die Steuerstange 37 setzt sich ebenso wie die Leckölkammer 26 bis auf die gegenüberliegende Seite der Steuerspule 36 fort, wo sie mit ihrer Durchgangsbohrung 38 in den Endbereich 40 der Leckölkammer 26 mündet. Die andere Leckölkammer 25 steht über den Seitenkanal 33 mit der zugehörigen Leckölkammer 25 in Verbindung.

In der dargestellte Position befindet sich das Ventil in seiner Neutralstellung.

Der Vorsteuerkolben befindet sich dabei in einer Position, in der alle Anschlussöffnungen 19, 20 sowie 29, 30 durch die Innenwandung des Hauptsteuerkolbens 6 verschlossen sind. Dies bedeutet aufgrund der nachfolgend geschilderten Funktionsweise auch, dass der Druck in beiden Steuerkammern 10, 11 ausgeglichen ist, so dass der Hauptsteuerkolben 6 aufgrund der Spiralfedern 12, 13 in seiner Mittelposition gehalten ist.

Wird nun der Vorsteuerkolben mit Hilfe des Linearmotors 36 beispielsweise vom Linearmotor 36 weg bewegt, so wird die Steuerkammer 11 über die Anschlussöffnung 20 mit Druck beaufschlagt. Zugleich wird auf der gegenüberliegenden Seite die Steuerkammer 10 über die Anschlussöffnung 29 und die Verbindungsöffnung 31 mit der drucklosen Leckölkammer 25 verbunden. Dies bewirkt, dass der Hauptsteuerkolben 6 vom Linearmotor 36 wegbewegt wird. Dabei wird die gewünschte Steuerfunktion des Ventils über die Ringvorsprünge 8 und die Querschnittsverjüngungen 9 bzw. die verschiedenen Fluidkammern 7 vorgenommen, indem verschiedene Fluidkammern 7 miteinander verbunden bzw. voneinander getrennt werden.

Da diese Steuerfunktionen des Steuerventils dem Stand der Technik entsprechen, wird an dieser Stelle von einer ausführlichen Erläuterung abgesehen.

Der Hauptsteuerkolben 6 kann sich bei definierter Position des Vorsteuerkolbens 5 so weit verschieben, bis die Anschlussöffnung 20 wieder durch die Innenwandung des Hauptsteuerkolbens 6 verschlossen wird und zugleich der Abfluss aus der Steuerkammer 10 über die Anschlussöffnung 29 ebenfalls dadurch unterbunden wird, dass die Anschlussöffnung 29 wiederum durch die Innenwandung des Hauptsteuerkolbens 6 verschlossen wird.

Wird der Vorsteuerkolben 5 durch den Linearmotor 35 in entgegengesetzter Richtung, d.h. zum Linearmotor 35 hin gezogen, so findet die umgekehrte Bewegung des Hauptsteuerkolbens 6 statt. In diesem Fall wird die Steuerkammer 11 über den Kanal 28 und die Anschlussöffnung 30 mit der drucklosen Leckölkammer 26 verbunden, während die Steuerkammer 10 über den Kanal 17 und die Anschlussöffnung 19 mit Druck beaufschlagt wird. Auch in diese Richtung vollzieht sich die Bewegung des Hauptsteuerkolbens soweit, bis alle Anschlussöffnungen 19, 20 bzw. 29, 30 durch die Innenwandung des Hauptsteuerzylinders 6 verschlossen sind.

Falls es aufgrund der Massenträgheit in Verbindung mit einen großen Impuls, z.B. bei einer schnellen Bewegung des Hauptsteuerkolbens zu einem Übersteuern kommt, d.h. falls der Hauptsteuerkolben 6 über die gewünschte Endstellung hinausschwingt, so wird er aktiv in die gewünschte Stellung zurückgedrückt, da die Druckbeaufschlagung der Steuerkammern 10, 11 ausschließlich von der relativen Position des Hauptsteuerkolbens 6 zum Vorsteuerkolben 5 abhängt. Dieses aktive Drücken des Hauptsteuerkolbens in Richtung der gewünschten Position ergibt sich bei Abweichungen von der Sollposition in beiden Richtungen.

An der dem Linearmotor 35 gegenüberliegenden Seite ist ein Wegsensor 41 angebracht, der in seinen Einzelheiten nicht näher dargestellt ist. Die konkrete Ausgestaltung des Wegaufnehmers ist für die Anwendung bei der Erfindung von untergeordneter Bedeutung. Grundsätzlich können alle Arten von Wegsensoren 41 verwendet werden, die die entsprechenden Ausmaße und Kenngrößen aufweisen.

Über den Wegsensor 41 wird die genaue Position des Vorsteuerkolbens 5 und damit auch die sich zwangsweise ergebende Position des Hauptsteuerkolbens 6 erfasst. Durch Rückkopplung des Signals des Wegsensors 41 zur Steuerung des Linearmotors 35 kann somit ein Regelkreis zur Lageregelung des erfindungsgemäßen Steuerventils ausgebildet werden.

An der Seite des Linearmotors 35 ist eine den Linearmotor 35 umgebende Abschlusskappe 42 angebracht, die für den dichten Abschluss der Leckölkammer 26 mit einem Dichtelement 43 verschlossen ist. Das Dichtelement 43 kann in axialer Richtung verschiebbar angeordnet werden. Über eine Zugangsöffnung 44 kann das Dichtelement 43 nach innen eingedrückt werden, bis es an der Steuerstange 37 anschlägt. Hierzu ist lediglich ein entsprechendes stangenförmiges Hilfswerkzeug (nicht im Einzelnen dargestellt) erforderlich. Durch Eindrücken der Steuerstange 37 kann sodann eine Nothandbetätigung des erfindungsgemäßen Steuerventils in eine Richtung ausgelöst werden.

Auf der gegenüberliegenden Seite befindet sich ein vergleichbares Dichtelement 45, das über eine Zugangsöffnung 46 zugänglich ist. Beim Eindrücken des Dichtelementes 45 auf entsprechende Weise, wozu das gleiche Hilfswerkzeug verwendbar ist, kann, z.B. über den Anschlag des Dichtelements 45 an dem Wegsensor 41 der Vorsteuerkolben in die zweite Richtung zur Nothandbetätigung verschoben werden.

Bei dieser Art der Nothandbetätigung sind die zugleich als Nothandbetätigungselemente dienenden Dichtelemente 43, 45 im Normalbetrieb statisch. Solche Dichtungen sind wesentlich einfacher zu realisieren und unterliegen darüber hinaus im Normalbetrieb keinerlei verschleiß. Zumindest kann der Verschleiß gegenüber einer ansonsten vorzusehenden dynamischen Dichtung (falls beispielsweise die Steuerstange 37 oder ein vergleichbares Element bis nach außen hin durchgeführt wäre), vernachlässigt werden.

Das erfindungsgemäße Steuerventil erlaubt das Durchschalten des vollen Hydraulikarbeitsdrucks auf die Steuerkammern 10 und 11 und somit auf den Hauptsteuerkolben 6 mit Hilfe des Vorsteuerkolbens 5. Hierdurch ist eine kurze Reaktionszeit des Hauptsteuerkolbens 6 gewährleistet. Darüber hinaus ist eine zuverlässige und stabile Einspannung des Hauptsteuerkolbens 6 in der gewünschten Stellung realisierbar.

Erst bei Druckabfall in beiden Steuerkammern 10, 11 wird der Hauptsteuerkolben 6 aufgrund der Spiralfedern 12, 13 in seine Neutralstellung gefahren. Diese Neutralstellung entspricht üblicherweise einer Ruhephase der mit dem Steuerventil zu steuernden Maschine oder Anlage, so dass Gefahrenmomente, Materialzerstörungen, etc. vermieden werden.

Aufgrund der Verwendung des hohen Arbeitsdrucks in den Steuerkammern 10, 11 können auch die Spiralfedern 12, 13 entsprechend stark ausgelegt werden, so dass die Neutralposition bei einem beidseitigen Druckabfall schnell und zuverlässig eingenommen wird.

Wesentlich bei der Erfindung ist jedoch die Verwendung eines Linearmotors, beispielsweise nach dem sogenannten "voice coil"-Prinzip, wie im Ausführungsbeispiel beschrieben. Der Magnetanker mit Steuerstange 37 kann nahezu berührungslos und somit verschleißfrei innerhalb der Steuerspule 36 geführt werden. Darüber hinaus ergibt sich durch die Anordnung des Linearmotors 35 in axialer Verlängerung zum Vorsteuerkolben 5 eine denkbar einfache und störungssichere Verbindungsmöglichkeit zwischen dem Magnetanker bzw. der Steuerstange 37 und dem Vorsteuerkolben 5.

### Bezugszeichenliste:

- 1: Steuerventil
- 2: Ventilgehäuse
- 3: Abschirmung
- 4: Abschirmung
- 5: Vorsteuerkolben
- 6: Hauptsteuerkolben
- 7: Fluidkammern
- 8: Ringvorsprung
- 9: Querschnittsverjüngung
- 10: Steuerkammer
- 11: Steuerkammer
- 12: Spiralfeder
- 13: Spiralfeder
- 14: Fluidverbindung
- 15: Bohrung
- 16: Fluidzufuhr
- 17: Kanal
- 18: Kanal
- 19: Anschlussöffnung
- 20: Anschlussöffnung
- 21: Verbindungsöffnung
- 22: Verbindungsöffnung
- 23: Abschlusshülse
- 24: Abschlusshülse
- 25: Leckölkammer
- 26: Leckölkammer
- 27: Kanal
- 28: Kanal
- 29: Anschlussöffnung
- 30: Anschlussöffnung
- 31: Verbindungsöffnung
- 32: Verbindungsöffnung
- 33: Seitenkanal
- 34: Axialbohrung
- 35: Linearmotor
- 36: Steuerspule
- 37: Steuerstange
- 38: Durchgangsbohrung
- 39: Kupplungshülse
- 40: Endbereich
- 41: Wegsensor
- 42: Abschlusskappe
- 43: Dichtelement
- 44: Zugangsöffnung
- 45: Dichtelement
- 46: Zugangsöffnung

## Patentansprüche

1. Steuerventil für fluidgesteuerte Maschinen oder Anlagen beispielsweise hydraulische oder pneumatische Maschinen oder Anlagen, mit einem Vorsteuerkolben (5), der in einem Hauptsteuerkolben (6) verschiebbar angeordnet ist, und mit einer Antriebseinheit zum gesteuerten Antrieb des Vorsteuerkolbens (5), wobei die Antriebseinheit einen Linearmotor (35) umfasst, **dadurch gekennzeichnet, dass** der Linearmotor (35) eine als Magnetanker ausgebildete Steuerstange (37) mit daran befestigtem Permanentmagneten umfasst, wobei der Magnetanker im Inneren einer Steuerspule (36) axial verschiebbar ist.

2. Steuerventil nach Anspruch 1, **dadurch gekennzeichnet, dass** der Magnetanker berührungslos in der Steuerspule (36) gelagert ist.

3. Steuerventil nach einem der vorgenannten Ansprüche, **dadurch gekennzeichnet, dass** der Linearmotor in axialer Verlängerung zum Vorsteuerkolben (5) angeordnet ist.

4. Steuerventil nach einem der vorgenannten Ansprüche, **dadurch gekennzeichnet, dass** der Linearmotor starr mit dem Vorsteuerkolben (5) gekoppelt ist.

5. Steuerventil nach einem der vorgenannten Ansprüche, **dadurch gekennzeichnet dass** ein Notbetätigungselement vorgesehen ist.

6. Steuerventil nach Anspruch 5, **dadurch gekennzeichnet, dass** das Notbetätigungselement auf der dem Vorsteuerkolben (5) gegenüberliegenden Seite des Linearmotors (35) angeordnet ist.

7. Steuerventil nach den Ansprüchen 5 oder 6, **dadurch gekennzeichnet, dass** das Notbetätigungselement (43) in Normalbetrieb vom Magentanker losgelöst und bei der Notbetätigung mit dem Magnetanker kraftschlüssig verbindbar ist.

8. Steuerventil nach einem der vorgenannten Ansprüche, **dadurch gekennzeichnet, dass** ein Notbetätigungselement auf der dem Linearmotor (35) gegenüberliegenden Seite des Vorsteuerkolbens (5) vorgesehen ist.

9. Steuerventil nach Anspruch 6, **dadurch gekennzeichnet, dass**, das auf der dem Linearmotor (35) gegenüberliegenden Seite des Steuerkolbens (5) liegende Notbetätigungselement im Normalbetrieb vom Vorsteuerkolben (5) losgelöst und bei der Notbetätigung mit dem Vorsteuerkolben (5) kraftschlüssig verbindbar list.

10. Steuerventil nach einem der vorgenannten Ansprüche, **dadurch gekennzeichnet, dass** ein Positions- oder Wegsensor (41) für den Vorsteuerkolben (5) vorgesehen ist.

11. Steuerventil nach einem der vorgenannten Ansprüche, **dadurch gekennzeichnet, dass** eine Lageregelung des Vorsteuerkolbens (5) mittels des Signals des Positions-oder Wegesensors (41) vorgesehen ist.

12. Steuerventil nach einem der vorgenannten Ansprüche, **dadurch gekennzeichnet, dass** der Hauptsteuerkolben (6) durch Positionierung des Vorsteuerkolbens (5) mit dem zu schaltenden bzw. zu steuernden Arbeitsdruck ohne Druckreduzierung beaufschlagbar ist.

13. Steuerventil nach einem der vorgenannten Ansprüche, **dadurch gekennzeichnet, dass** eine über Federlelemente (12, 13) einstellbare Neutralposition des Hauptsteuerkolbens (6) vorgesehen ist.

14. Hydraulik- und/oder Pneumatikanlage bzw. -maschine, **dadurch gekennzeichnet, dass** ein Steuerventil nach einem der vorgenannte Ansprüche vorgesehen ist.

## Claims

1. Control valve for fluid-controlled machines or installations, for example hydraulic or pneumatic machines or installations, with a hydraulic piston (5), which is arranged displaceably in a main control piston (6), and with a drive unit for the controlled drive of the hydraulic piston (5), wherein the drive unit comprises a linear motor (35), **characterised in that** the linear motor (35) comprises a control rod (37) designed as a magnet armature with permanent magnets secured thereonto, wherein the magnet armature is axially displaceable inside a control coil (36).

2. Control valve according to claim 1, **characterised in that** the magnet armature is mounted contact-free in the control coil (36).

3. Control valve according to one of the preceding claims, **characterised in that** the linear motor is arranged in axial extension of the hydraulic piston (5).

4. Control valve according to one of the preceding claims, **characterised in that** the linear motor is coupled rigidly to the hydraulic piston (5).

5. Control valve according to one of the preceding claims, **characterised in that** an emergency operating element is provided.

6. Control valve according to claim 5, **characterised in that** the emergency operating element is arranged on the side of the linear motor (35) opposite the hydraulic piston (5).

7. Control valve according to claims 5 or 6, **characterised in that** the emergency operating element (43) in normal operation is detached from the magnet armature and on emergency operation can be connected in a frictional manner to the magnet armature.

8. Control valve according to one of the preceding claims, **characterised in that** an emergency operating element is provided on the side of the hydraulic position (5) opposite the linear motor (35).

9. Control valve according to claim 6, **characterised in that** the emergency operating element lying on the side of the control piston (5) opposite the linear motor (35) is detached in normal operation from the hydraulic piston (5) and in emergency operation can be connected in a frictional manner to the hydraulic piston (5).

10. Control valve according to one of the preceding claims, **characterised in that** a position or motion sensor (41) is provided for the hydraulic piston (5).

11. Control valve according to one of the preceding claims, **characterised in that** a position control of the hydraulic piston (5) is provided by means of the signal from the position or motion sensor (41).

12. Control valve according to one of the preceding claims, **characterised in that** the main control piston (6) can be pressurised by positioning the hydraulic piston (5) with operating pressure to be connected or controlled without a reduction in pressure.

13. Control valve according to one of the preceding claims, **characterised in that** a neutral position of the main control piston (6) which can be adjusted via spring elements (12, 13) is provided.

14. Hydraulic and/or pneumatic installation or machine, **characterised in that** a control valve is provided according to one of the preceding claims.

## Revendications

1. Vanne-pilote pour des machines ou installations commandées par un fluide, par exemple pour des machines ou installations hydrauliques ou pneumatiques, comportant un piston-pilote (5), lequel est agencé de manière à pouvoir coulisser dans un piston principal (6), et comportant une unité de commande destinée à commander de manière régulée le piston-pilote (5), l'unité de commande présentant un moteur linéaire (35),
**caractérisée en ce que** le moteur linéaire (35) comporte une tige de commande (37) réalisée en tant qu'induit avec des aimants permanents fixés dessus, l'induit pouvant être déplacé dans le sens axial à l'intérieur d'une bobine de commande (36).

2. Vanne-pilote selon la revendication 1,
**caractérisée en ce que** l'induit est monté sans contact dans la bobine de commande (36).

3. Vanne-pilote selon l'une des revendications précédentes,
**caractérisée en ce que** le moteur linéaire est agencé dans le prolongement axial du piston-pilote (5).

4. Vanne-pilote selon l'une des revendications précédentes,
**caractérisée en ce que** le moteur linéaire est couplé au piston-pilote (5) de manière rigide.

5. Vanne-pilote selon l'une des revendications précédentes,
**caractérisée en ce qu'**il est prévu un élément d'actionnement d'urgence.

6. Vanne-pilote selon la revendication 5,
**caractérisée en ce que** l'élément d'actionnement d'urgence est agencé sur le côté du moteur linéaire (35) opposé au piston-pilote (5).

7. Vanne-pilote selon les revendications 5 ou 6,
**caractérisée en ce que** l'élément d'actionnement d'urgence (43) est séparé de l'induit en fonctionnement normal et peut être relié par force à l'induit lors de l'actionnement d'urgence.

8. Vanne-pilote selon l'une des revendications précédentes,
**caractérisée en ce qu'**il est prévu un élément d'actionnement d'urgence sur le côté du piston-pilote (5) opposé au moteur linéaire (35).

9. Vanne-pilote selon la revendication 6,
**caractérisée en ce que** l'élément d'actionnement d'urgence situé sur le côté du piston-pilote (5) opposé au moteur linéaire (35) est séparé du piston-pilote (5) en fonctionnement normal et peut être relié par force au piston-pilote (5) lors de l'actionnement d'urgence.

10. Vanne-pilote selon l'une des revendications précédentes,
**caractérisée en ce qu'**il est prévu un détecteur de position ou de déplacement (49) du piston-pilote (5).

11. Vanne-pilote selon l'une des revendications précédentes,
**caractérisée en ce qu'**il est prévu une régulation de position du piston-pilote (5) au moyen du signal du détecteur de position ou de déplacement (41).

12. Vanne-pilote selon l'une des revendications précédentes,
**caractérisée en ce que**, par le positionnement du piston-pilote (5), le piston principal (6) peut être alimenté en pression de travail à commuter ou à commander sans réduction de pression.

13. Vanne-pilote selon l'une des revendications précédentes,
**caractérisée en ce qu'**il est prévu une position neutre du piston principal (6) pouvant être réglée par le biais d'éléments à ressort (12, 13).

14. Installation ou machine hydraulique et/ou pneumatique,
**caractérisée en ce qu'**il est prévu une vanne-pilote selon l'une des revendications précédentes.
